# FASCICULE DE BREVET EUROPEEN

(11) **EP 4 280 867 B1**
(45) Date de publication et mention de la délivrance du brevet: **13.11.2024**
(21) Numéro de dépôt: 22700655.8
(22) Date de dépôt: 17.01.2022
(51) Int. Cl.: A01K 7/00, A01K 39/02, C02F 1/66, C02F 1/68, C02F 1/72, C02F 103/20, B01F 23/237

(54) **PROCÉDÉ DE DOPAGE EN OXYGÈNE DES EAUX D'ABREUVEMENT DES VOLAILLES AVEC MAÎTRISE DU CALCAIRE**
VERFAHREN ZUR SAUERSTOFFDOTIERUNG VON TRÄNKWASSER FÜR GEFLÜGEL MIT KONTROLLE DES KALKGEHALTS
PROCESS FOR OXYGEN DOPING OF DRINKING WATER FOR POULTRY WITH CONTROL OF THE LIME CONTENT

(30) Priorité: 21.01.2021 FR 2100566
(43) Date de publication de la demande: 29.11.2023
(73) Titulaire: L'AIR LIQUIDE, SOCIETE ANONYME POUR L'ETUDE ET L'EXPLOITATION DES PROCEDES GEORGES CLAUDE, 75007 Paris (FR); Air Liquide France Industrie, 75007 Paris (FR)
(72) Inventeur: IBARRA, Dominique, 78350 Les Loges-En-Josas (FR); CAMPO, Philippe, 92227 Bagneux (FR); COUSIN, Franck, 59120 Loos (FR); LE DRU, Pauline, 44476 Carquefou (FR)
(74) Mandataire: Air Liquide
(86) Numéro de dépôt international: PCT/EP2022/050837
(87) Numéro de publication internationale: WO 2022/157096

(56) Documents cités:
- EP-A1- 0 764 612
- EP-A1- 3 639 659
- EP-B1- 0 764 612
- FR-A1- 2 767 522
- US-A- 6 063 295

## Description

La présente invention concerne le domaine des élevages d'animaux, et notamment de volailles et de porcs ou encore de lapins, et s'intéresse tout particulièrement à la question de leur abreuvement.

La Demanderesse a effectué de nombreux travaux sur cette question, on pourra notamment se reporter au document EP-3 709 793 (WO2019097142).

Et ainsi les travaux effectués depuis la proposition technique qui avait été développée dans ce document antérieur ont montré qu'un dépôt pouvait se former dans la cuve contenant l'eau d'abreuvement oxygénée. Les méthodes d'analyse utilisées ont mis en évidence la formation de différents carbonates, de calcium et de potassium notamment.

La formation de ces carbonates s'explique par un phénomène de perte de CO₂ (phénomène dit de « stripping ») : en effet, quand on injecte un gaz dans un liquide, les bulles de gaz qui ne seront pas solubilisées et qui partent à l'atmosphère vont, en traversant le liquide, vouloir se mettre à l'équilibre avec les composés (volatils) présents dans le liquide, en particulier les gaz. Ici considérant l'oxygène que l'on injecte dans l'eau, la partie des bulles qui partent à l'atmosphère, quand elles traversent l'eau, vont capter les autres gaz (Azote et CO₂) pour tendre vers l'équilibre et ainsi appauvrir en CO₂ libre l'eau.

Cette perte de CO₂ favorise le dépôt de calcaire.

La présente invention s'attache alors à proposer une solution pour résoudre ce phénomène de formation de dépôts calcaires. Comme on le verra dans ce qui suit, cette solution permet également de limiter la formation de biofilm, notamment dans le réseau d'alimentation en eau de l'élevage.

Pour cela, la solution proposée ici consiste à enrichir l'eau en CO₂ en injectant un mélange O₂/CO₂ au lieu d'injecter uniquement de l'oxygène. Ainsi les carbonates se transforment en bicarbonates, solubles et non incrustants.

En général, sur une eau dont la composition est moyenne, c'est-à-dire pour un TAC compris entre 10 et 30 °f et un TH compris entre 15 et 40 °f, on peut considérer que disposer d'une teneur en CO₂ dissous comprise entre 3 et 20 mg/l permet d'éviter le dépôt de tartre.

La présente invention propose plusieurs solutions avantageuses pour la mise en oeuvre d'une telle injection.

Il est notamment possible d'injecter un mélange gazeux avec un pourcentage fixe de CO₂ dans un gaz riche en oxygène, pour maintenir constant un niveau de CO₂ dissous.

Ainsi à titre d'exemple, pour une eau à pression atmosphérique à 20°C, une injection d'un mélange à 1% de CO₂ dans l'oxygène permettra à l'équilibre de maintenir approximativement 17 mg/l de CO₂ dissous et ainsi d'éviter la formation de dépôt de tartre.

Bien clairement il est possible, au lieu d'injecter un mélange gazeux, d'injecter simultanément un débit d'oxygène et un débit de CO₂ représentant 1% du débit d'oxygène pour obtenir le même résultat.

Selon un mode avantageux, pour un contrôle précis de l'injection de CO₂, en particulier quand l'injection du gaz CO₂ est réalisée séparément de l'injection de l'oxygène, il est possible par une mesure de pH d'optimiser l'injection pour obtenir un niveau de CO₂ dissous conforme à l'objectif visé pour éviter la formation de dépôts de tartre.

On peut résumer les avantages qu'offre l'invention de la manière suivante :
- La réduction du phénomène de formation de calcaire,
- une grande simplicité de mise en oeuvre,
- on limite la formation de biofilm du fait de la baisse de pH, et du fait de l'absence de microstructures pouvant être le foyer de développements bactériens,
- l'apport de bicarbonates est avantageux pour faciliter la digestion des animaux.

Il est possible, avec cette co-injection d'oxygène et de CO₂, en particulier pour des niveaux plus importants de CO₂ dissous, de bénéficier des effets conjugués d'une eau riche en oxygène et en CO₂ pour l'alimentation des animaux et notamment des volailles.

Et c'est tout le mérite de la présente invention d'avoir compris qu'il ne suffisait pas, pour penser remédier à ce problème de calcaire, d'injecter simplement un gaz puis l'autre, mise en oeuvre certes la plus simple, mais qui selon la Demanderesse n'aurait pas permis d'atteindre un résultat optimum.

En effet :
- si l'on injecte le CO₂ puis l'oxygène, l'injection d'oxygène ferait désorber le CO₂.
- Inversement une injection de CO₂ intervenant après une injection d'oxygène, si elle va au-delà de la saturation en CO₂, ferait désorber l'oxygène.

C'est donc le mérite de la présente invention d'avoir compris et démontré l'intérêt de l'injection simultanée des deux gaz à l'aide d'un mélange.

On peut par ailleurs penser à l'existence d'une synergie au niveau du rendement des transferts en combinant O₂ et CO₂, i.e apportant davantage qu'une simple addition des effets de l'un et l'autre des gaz.

L'invention concerne alors un procédé d'élevage d'animaux, et notamment de volailles ou de porcins, où de l'eau est fournie aux animaux pour leur abreuvement, se caractérisant en ce que l'on injecte dans l'eau d'abreuvement avant que celle-ci n'atteigne les animaux, de l'oxygène et du CO₂ selon l'un des modes suivants :
- On réalise simultanément dans l'eau deux injections, une de CO₂ et une d'oxygène ;
- On réalise l'injection dans l'eau d'un mélange d'oxygène et de CO₂.

Le mélange comporte avantageusement entre 1 et 30% de CO₂.

L'invention concerne également un procédé d'enrichissement en O₂ et CO₂ de l'eau d'abreuvement d'un élevage, équipé d'un système d'abreuvement automatique des animaux, par exemple de type "pipettes".

On peut envisager selon l'invention de réaliser l'injection en ligne, dans la ligne d'alimentation, en amont du point où les animaux viennent s'abreuver, en mettant en oeuvre, comme bien connu de l'homme du métier de ces techniques d'injection de gaz dans des liquides, un temps de contact suffisant pour réaliser la dissolution.

Toujours à titre illustratif, on peut également envisager selon l'invention de réaliser l'injection dans un bac de rétention souvent présent dans ce type d'élevage, ou encore dans le local technique de traitement de l'eau présent sur de telles installations.

## Revendications

1. Procédé d'élevage d'animaux et notamment de volailles ou de porcins, où de l'eau est fournie aux animaux pour leur abreuvement, **se caractérisant en ce que** l'on injecte dans l'eau d'abreuvement avant que celle-ci n'atteigne les animaux, de l'oxygène et du CO₂ selon l'un des modes suivants :
- On réalise simultanément dans l'eau deux injections, une de CO₂ et une d'oxygène ;
- On réalise l'injection dans l'eau d'un mélange d'oxygène et de CO₂.

## Patentansprüche

1. Verfahren zur Aufzucht von Tieren und insbesondere Geflügel oder Schweinen, wobei den Tieren Wasser zum Tränken zugeführt wird, **dadurch gekennzeichnet, dass** man in das Trinkwasser, bevor es zu den Tieren gelangt, Sauerstoff und CO₂ gemäß einem der folgenden Modi einleitet:
- man führt gleichzeitig zwei Einleitungen, eine von CO₂ und eine von Sauerstoff, in das Wasser durch;
- man führt die Einleitung einer Mischung von Sauerstoff und CO₂ in das Wasser durch.

## Claims

1. Method for rearing animals and in particular poultry or pigs, where water is supplied to the animals in order to water them, which is **characterized in that** oxygen and CO₂ are injected into the drinking water, before the latter reaches the animals, according to one of the following modes:
- two injections, one of CO₂ and one of oxygen, are carried out simultaneously into the water;
- the injection into the water of a mixture of oxygen and CO₂ is carried out.
